# EUROPÄISCHE PATENTANMELDUNG

(11) **EP 2 372 434 A1**
(43) Veröffentlichungstag der Anmeldung: **05.10.2011**
(21) Anmeldenummer: 11000477.7
(22) Anmeldetag: 21.01.2011
(51) Int. Cl.: G02C 5/14, G02C 11/02

(54) **Brillenbügel**

(30) Priorität: 25.02.2010 DE 202010002797 U
(71) Anmelder: InoSwiss Gmbh, 6314 Unterägeri (CH)
(72) Erfinder: Müller, Veit, 8426 Lufingen (CH)
(74) Vertreter: Graf Glück Habersack Kritzenberger

(57) **Zusammenfassung**

Die Erfindung betrifft einen Brillenbügel bestehend aus zumindest einem Auflageabschnitt (2) und einem daran anschließenden Bügelabschnitt (3), dessen freies Ende einen Anschlussbereich (4) aufweist. Besonders vorteilhaft weist der Bügelabschnitt (3) zumindest einen sich abschnittsweise entlang der Bügellängsachse (L) im Inneren des Bügelabschnittes (3) erstreckenden Aufnahmeraum (7) und zumindest einen transparenten Abschnitt (3') auf, der die Sicht von außen in den Aufnahmeraum (7) freigibt, wobei der Aufnahmeraum (7) über zumindest eine Öffnung (9) nach außen verfügt und der Bügelabschnitt (3) einen Fotorahmen ausbildet.

## Beschreibung

Die Erfindung betrifft einen Brillenbügel gemäß dem Oberbegriff des Patentanspruches 1.

Brillengestelle sind hinreichend aus dem Stand der Technik bekannt. Das Brillengestell ist vorzugsweise mehrteilig ausgebildet, welches aus zumindest einem Nasenbügel sowie ggf. Stegelementen zur Befestigung der Brillengläser als auch an diesen vorgesehenen Brillenbügeln aufweist. Hierbei können unterschiedlichste Variationen, insbesondere auch sogenannte Randlosbrillen, bei denen die Befestigung des Nasenträgerteils sowie der Brillenbügel unmittelbar am Brillenglas erfolgt, vorgesehen sein.

Zwar sind auf dem Markt eine Vielzahl unterschiedliche Designs aufweisende Brillenbügel erhältlich, jedoch geht der Trend eindeutig zur Individualisierung und/oder Personalisierung des Designs des Brillengestells, insbesondere des Brillenbügels.

Bekannt sind beispielsweise Wechselsysteme, welche es dem Benutzer ermöglichen, zu einem Paar Brillengläser unterschiedliche Designs aufweisende Brillengestelle und/oder Brillenbügel vorzusehen. Der Brillenträger kann somit das Aussehen seiner Brille durch die Variation der verwendeten Brillenbügel in vorgegebener Weise variieren. Allerdings ist seitens der Kunden eine noch stärkere Individualisierung von Brillengestellen, insbesondere die durch den Brillenträger selbst, gewünscht.

Aus der EP 1 860 484 A1 sind beispielsweise Brillen bekannt, deren Brillengestell durch die Aufnahme von Ornamenten, welche auf ein Brillengrundgestell aufgesetzt werden, individualisiert werden kann.

Auch sind Brillen bekannt, welche in einem nach außen gerichteten Seitenabschnitt der Brillenbügel eine Ausnehmung zur Aufnahme eines Designelementes aufweisen, welches den optischen Gesamteindruck des Brillenbügels bestimmt.

Ferner sind der US 2009/0122253 A1 und der US 4,806,008 Brillenbügel zu entnehmen, welche ein auswechselbares, dekoratives Element aufweisen, das in eine seitlich geöffnete Ausnehmung des Brillenbügels einsetzbar ist. Das auswechselbare Element ermöglicht beispielsweise die Kennzeichnung des Brillengestells mit Name und Adresse des Brillenträgers und somit eine Personalisierung des Brillengestells.

Ausgehend hiervon liegt der Erfindung die Aufgabe zugrunde, ein Brillengestell, insbesondere einen Brillenbügel bereitzustellen, dessen optisches Erscheinungsbild durch den Brillenträger individuell an seine Bedürfnisse anpassbar ist, und zwar vorzugsweise einfach und schnell. Die Aufgabe wird ausgehend vom Oberbegriff des Patentanspruches 1 durch dessen kennzeichnende Merkmale gelöst.

Der wesentliche Aspekt des erfindungsgemäßen Brillenbügel wird darin gesehen, dass der Bügelabschnitt zumindest einen sich abschnittsweise entlang der Bügellängsachse im Inneren des Bügelabschnittes erstreckenden Aufnahmeraum und zumindest einen transparenten Abschnitt aufweist, der die Sicht von außen in den Aufnahmeraum freigibt und dass der Aufnahmeraum über zumindest eine Öffnung nach außen verfügt. Besonders vorteilhaft bildet der Aufnahmeraum einen Hohlraum innerhalb des Bügelabschnittes des Brillenbügels, der über einen transparenten Bereich von außen einsehbar ist. Hierbei bildet der Bügelabschnitt einen Fotorahmen aus. Damit kann durch ein im Aufnahmeraum aufgenommenes vorzugsweise flach ausgebildetes Designelement, Flüssigkeiten, Schüttungen oder sonstige geeignete Materialen, die über den ein Sichtfenster bildenden transparenten Abschnitt des Bügelabschnittes von außen sichtbar sind, das Design des Brillenbügel benutzerindividuell schnell und einfach individualisiert werden. Der Aufnahmeraum des erfindungsgemäßen Brillenbügels stellt somit im Wesentlichen einen Hohlraum dar, der im Inneren des Brillenbügels ausgebildet, der über zumindest eine Öffnung von außen zugänglich ist und damit eine Art "mobilen" Fotorahmen bildet. Vorzugsweise kann die Öffnung verschließbar ausgebildet sein.

Bevorzugt ist der den Aufnahmeraum umfassende Bügelabschnitt aus zwei gegenüberliegenden und im wesentlichen parallel zueinander verlaufenden seitlichen Wandabschnitten gebildet, die an der Oberkante und der Unterkante des Brillenbügels über einen oberen bzw. unteren Verbindungswandabschnitt miteinander verbunden sind. Der Aufnahmeraum weist dabei besonders vorteilhaft eine längliche, schlitzartige Form auf und eignet sich somit insbesondere für die Aufnahme eines flächigen Designelementes und/oder von Fluiden bzw. feinen Schüttungen. Die schlitzartige Form ermöglicht insbesondere eine ausreichende Fixierung der Designelemente, so dass ein in den Aufnahmeraum eingeführtes flächigen Designelementes ohne zusätzliche Fixierung gehalten wird. Vorteilhaft ist der äußere, nämlich der vom Gesicht des Brillenträgers nach außen weisende, seitliche Wandabschnitt teilweise transparent ausgebildet, wodurch das individuelle Design des Brillenbügels am besten zur Geltung kommt.

Die nach außen gerichtete Öffnung ist vorteilhaft im Verbindungsabschnitt ausgebildet. Besondere Vorteile ergeben sich, wenn die Öffnung im Verbindungsabschnitt während des Tragens einer Brille, also im aufgeklappten Zustand der Brille, durch weitere Teile des Brillengestelles, insbesondere durch einen Blendenabschnitt eines im Anschlussbereich des Brillenbügels vorgesehenen Anschlussscharniers abgedeckt wird. Dadurch wird nicht nur die Öffnung abgedeckt, sondern gleichzeitig ein Herausrutschen oder Herausfallen des Designelementes beim Tragen der Brille verhindert. Im geschlossenen Zustand der Brille, nämlich mit eingeklappten Brillenbügeln, wird die Öffnung freigegeben, der Aufnahmeraum ist zugänglich und kann beispielsweise mit dem gewünschten flächigen Designelement bestückt werden.

Die nach außen gerichtete Öffnung kann jedoch auch an der Ober- oder Unterkante des Brillenbügels oder in einem Übergangsbereich zwischen Auflageabschnitt und Bügelabschnitt ausgebildet sein. Je nach Form und Abmessung des Brillenbügels kann die Öffnung an den entsprechenden Stellen am zweckmäßigsten sein und sich am besten in das gesamte Erscheinungsbild der Brille einfügen. Bevorzugt ist die nach außen gerichtete Öffnung schlitzartig oder spaltartig ausgebildet, wodurch ein besonders einfaches Einführen des flächigen Designelementes möglich ist.

Vorzugsweise ist der seitliche Wandabschnitt des Bügelabschnittes, der vom Gesicht des Brillenträgers nach außen abgewandt und damit nach außen gerichtet ist, zumindest teilweise transparent ausgebildet, wobei sich die Transparenz auch auf in Form und Größe variabel transparenter Abschnitte beschränken kann. Durch die transparenten Abschnitte werden unterschiedliche Sichtfenster in den Aufnahmeraum ausgebildet, wodurch sich besondere und auffällige optische Effekte erzielen lassen.

Das flächige Designelement ist bevorzugt aus Metall, Folie, Kunststofffolie, Papier und/oder Fotopapier hergestellt und ist insbesondere bevorzugt ein einschiebbares, flaches Plättchen mit bedruckter oder anderweitig verzierter Außenseite. Besondere Vorteile ergeben sich durch ein personalisierbares, flächiges Designelement, da beispielsweise Name und Adressdaten des Brillenträgers oder sonstige Angaben zur Person bei Verlust der Brille hilfreich sind, um die Brille an ihren Besitzer zurückzuführen.

Insbesondere ist das flächige Designelement durch ein Foto gebildet, dessen Form und/oder Größe vorzugsweise an die Form und/ Größe des Aufnahmeraumes angepasst ist. Somit ermöglicht der Erfindungsgemäße Brillenbügel persönliche Fotos des Brillenträgers in den Aufnahmeraum einzuführen und damit einen in den Brillenbügel integrierten und damit tragbaren Fotorahmen auszubilden.

Vorteilhafte Weiterbildungen der Erfindung sind Gegenstand der abhängigen Ansprüche. Zudem ergeben sich vorteilhafte Weiterbildungen, Vorteile und Anwendungsmöglichkeiten der Erfindung auch aus der nachfolgenden Beschreibung von Ausführungsbeispielen und aus den Figuren. Dabei sind alle beschriebenen und/oder dargestellten Merkmale für sich oder in beliebiger Kombination grundsätzlich Gegenstand der Erfindung unabhängig von ihrer Zusammenfassung in den Ansprüchen oder deren Rückbeziehung. Auch wird der Inhalt der Ansprüche zu einem Bestandteil der Beschreibung gemacht.

Nachfolgend wird die Erfindung an einem Ausführungsbeispiel anhand von Figuren näher beschrieben. Es zeigen:
- Fig. 1: eine schematische Seitenansicht des erfindungsgemäßen Brillenbügels,
- Fig. 2: eine stirnseitige Ansicht auf den Verbindungsbereich des Brillenbügels,
- Fig. 3: eine Seitenansicht eines flächigen Designelementes und
- Fig. 4: eine perspektivische Ansicht auf einen mit weiteren Brillengestellteilen verbundenen erfindungsgemäßen Brillenbügel.

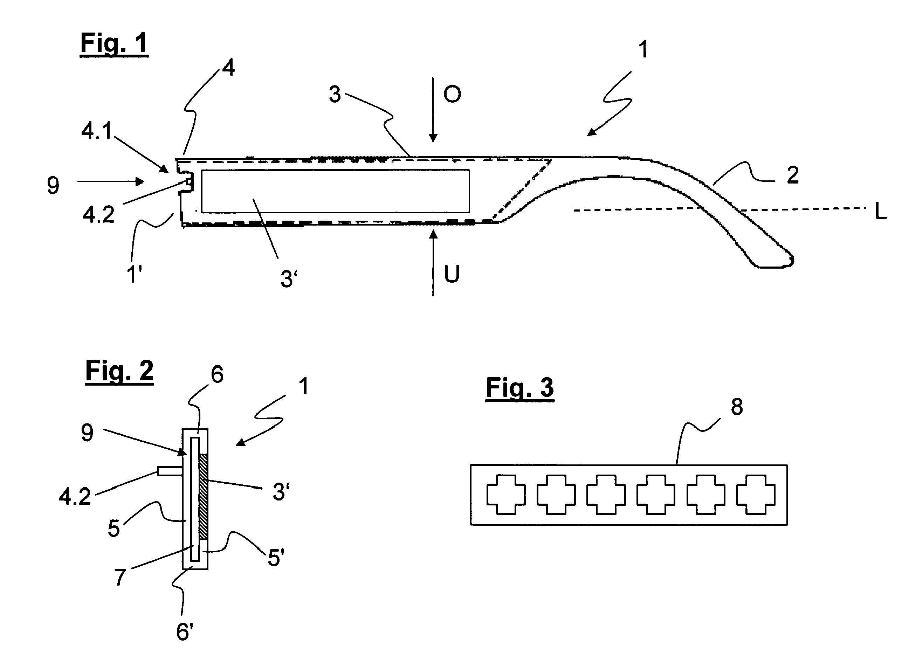

Der erfindungsgemäße Brillenbügel 1 ist in Fig. 1 in einer schematischen Seitenansicht und in Fig. 2 in einer stirnseitigen Ansicht dargestellt.

Der Brillenbügel 1 besteht im Wesentlichen aus einem Auflageabschnitt 2, der zur Auflage auf den Ohren des Brillenträgers ausgebildet ist und hierbei vorzugsweise zumindest teilweise die Ohrmuschel des Brillenträgers umgreift. Hierbei sind unterschiedliche Variationen des aus dem Stand der Technik an sich bekannten gebogenen Auflageabschnittes 2 denkbar.

Der Auflageabschnitt 2 geht in einen Bügelabschnitt 3 über, welcher sich im wesentlichen entlang der Bügellängsachse L erstreckt und an dem vom Auflageabschnitt 2 gegenüberliegenden stirnseitigen Ende 1' einen Verbindungsbereich 4 aufweist, in dem der Brillenbügel 1 mit weiteren Bauteilen eines Brillengestells, wie z.B. einem Anschlussscharniers 10 verbindbar ist.

Insbesondere weist der Brillenbügel 1 im Verbindungsbereich 4 eine Ausnehmung 4.1 auf, die zur Aufnahme eines weiteren Brillengestellteils, z.B. eines Anschlussscharniers 10, welche die Verbindung zum Brillenglas herstellt, vorgesehen ist. Zur scharnierartigen Anbindung des Anschlussscharniers 10 kann beispielsweise im Bereich der Ausnehmung 4.1 ein Verbindungsstegelement 4.2 vorgesehen sein.

Erfindungsgemäß umfasst der Brillenbügel 1 zumindest im Bügelabschnitt 3 einen im Inneren gelegenen Aufnahmeraum 7, und zwar vorzugsweise beginnend am Verbindungsbereich 4 des stirnseitigen Endes 1' und sich entlang der Bügellängsachse L erstreckend. Somit weist der Bügelabschnitt 3 einen den Aufnahmeraum 7 bildenden Hohlraum auf. Ferner umfasst der Bügelabschnitt 3 zumindest einen transparenten Abschnitt 3', der die Sicht von außen in den Aufnahmeraum 7 freigibt, wobei der Aufnahmeraum 7 zumindest eine Öffnung 9 nach außen aufweist. Somit bildet der Bügelabschnitt 3 einen näherungsweise geschlossenen Aufnahmeraum mit zumindest einem Sichtfenster 3' aus.

Der Bügelabschnitt 3 besteht im Bereich des Aufnahmeraumes 7 im Prinzip aus zwei parallel zueinander angeordneten, seitlichen Wandabschnitten 5, 5', die über einen oberen und unteren, stegartigen Verbindungswandabschnitt 6, 6' miteinander verbunden. Der obere und untere, stegartige Verbindungswandabschnitt 6, 6' verlaufen somit entlang der Oberkante O bzw. Unterkante U des Brillenbügels 1.

Zumindest einer der seitlichen Wandabschnitte 5, 5' ist wenigstens in einem Teilbereich 3' transparent ausgebildet, und zwar vorzugsweise der vom Gesicht des Brillenträgers nach außen abgewandte seitliche Wandabschnitt 5' des Bügelabschnittes 3. Mittels des zumindest teilweise transparent ausgebildeten seitlichen Wandabschnittes 5' wird die Sicht in den Aufnahmeraum 7 freigegeben. Dadurch ist ein in den Aufnahmeraum 7 eingeführtes, flächiges Designelement 8 und/oder ein Fluid bzw. eine Schüttung nach außen sichtbar, was die optische Erscheinungsform des Brillenbügels 1 maßgeblich mitbestimmt. Dadurch kann der Benutzer des Brillenbügels 1 eine personenbezogene Individualisierung des Brillenbügels 1 vornehmen. In Figur 3 ist beispielhaft eine schematische Seitenansicht eines flächigen Designelementes 8 dargestellt.

Alternativ können mehrere Aufnahmeräume 7 im Bügelabschnitt 3 vorgesehen werden, welche sich jeweils entlang der Bügellängsachse L erstrecken und ggf. unterschiedliche Querschnittsformen aufweisen, um mehrere Designelemente 8 unterschiedlicher Form und Länge und/oder mehrere verschiedene Fluide bzw. Schüttungen im Brillenbügel 1 aufnehmen zu können.

Auch können beide seitlichen Wandabschnitte 5, 5' transparent ausgebildet sein oder die transparente Ausbildung eine vorgegebene Umfangsform aufweisen, so dass mehrere Sichtfenster unterschiedlicher Form und Größe im seitlichen Wandabschnitt 5, 5' erzeugt werden, welche diverse optische Erscheinungen bzw. Durchsichten durch den Bügelabschnitt 3 des Brillenbügels 1 erlauben.

Vorzugsweise ist der Brillenbügel 1 ist mittels eines zweistufigen Spritzgussverfahrens hergestellt, wobei in einem ersten Schritt mit geeignetem Werkzeug in einer speziellen Form der Auflageabschnitt 2 samt dem hinteren seitlichen Wandabschnitt 5 aus einem beispielsweise farbigen Kunststoffmaterial geformt werden. Hierdurch entsteht bereits die Grundform des den Aufnahmeraum 7 bildenden Hohlraumes im Brillenbügel 1.

In einem zweiten Schritt der Herstellung werden nach Einlegen eines Zungenelementes in den Hohlraum der noch fehlende seitliche Wandabschnitt 5' aus einem beispielsweise transparenten Kunststoffmaterial gegossen, wodurch der näherungsweise geschlossene Aufnahmeraum 7 entsteht.

Zur Führung bzw. Aufnahme des flächigen Designelementes 8 oder des Fluids bzw. der feinkörnigen Schüttung ist die Öffnung 9 schlitz- oder spaltartig ausgebildet und im Verbindungsbereich 4 am stirnseitigen Ende 1' des Brillenbügels 1 vorgesehen. Alternativ kann die Öffnung 9 auch an der Ober- oder Unterkante O, U oder in einem Übergangsbereich zwischen Auflageabschnitt 2 und Bügelabschnitt 3 angeordnet sein.

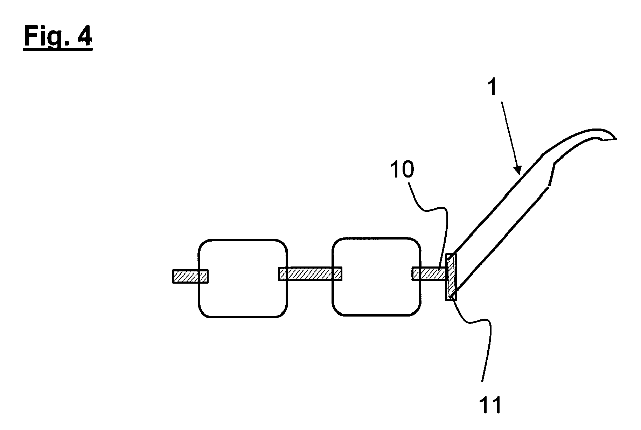

Besonders vorteilhaft ist wie in der Figur 4 dargestellt die Öffnung 9 im Verbindungsabschnitt 4 während des Tragens einer Brille, also im aufgeklappten Zustand der Brille, durch eine am Gläserrahmen 10 befestigte Blende 11 abgedeckt und wird lediglich im geschlossenen Zustand der Brille, nämlich mit eingeklappten Brillenbügeln 1 zugänglich.

Das flächige Designelement 8 ist vorzugsweise aus Papier, Metall, Folie, Kunststofffolie, Fotopapier oder ähnlichen flachen länglichen Elementen hergestellt und weist an zumindest einer Seite eine Verzierung und/oder grafische Elemente, wie z.B. Aufdrucke auf. Das flächige Designelement 8 ist im Hinblick auf seine Maße, Umfangsform und Stärke an die Dimensionierung des Aufnahmeraumes 7 angepasst und kann somit nahezu passgenau in diesen eingeführt werden. Vorzugsweise ist das flächige Designelement 8 als Einschiebeplättchen ausgebildet.

Das flächige Designelement 8 kann insbesondere durch auf Fotopapier aufgedruckte Abbildungen, insbesondere private Fotoaufnahmen oder beliebige weitere Bildaufnahmen gebildet sein, welche der Benutzer auf Fotopapier ausdruckt und somit auf einfache Art und Weise und ohne Zusatzkosten einen individuellen Brillenbügel 1 erhält. Zur Aufnahme derartiger Fotos des Brillenträgers bildet Erfindungsgemäß der Bügelabschnitt 3 des Brillenbügels 1 einen geeigneten Fotorahmen.

### Bezugszeichenliste

- 1: Brillenbügel
- 1': stirnseitiges Ende
- 2: gebogener Auflageabschnitt
- 3: Bügelabschnitt
- 3': transparenter Abschnitt / Sichtfenster
- 4: Verbindungsabschnitt
- 4.1: Ausnehmung
- 4.2: Verbindungsstegelement
- 5, 5': seitliche Wandabschnitte
- 6, 6': Verbindungswandabschnitte
- 7: Aufnahmeraum
- 8: flächiges Designelement
- 9: Öffnung
- 10: Anschlussscharnier
- 11: Blendenabschnitt

- L: Bügellängsachse
- O: Oberkante
- U: Unterkante

## Patentansprüche

1. Brillenbügel bestehend aus zumindest einem Auflageabschnitt (2) und einem daran anschließenden Bügelabschnitt (3), dessen freies Ende einen Anschlussbereich (4) aufweist, **dadurch gekennzeichnet, dass** der Bügelabschnitt (3) zumindest einen sich abschnittsweise entlang der Bügellängsachse (L) im Inneren des Bügelabschnittes (3) erstreckenden Aufnahmeraum (7) und zumindest einen transparenten Abschnitt (3') aufweist, der die Sicht von außen in den Aufnahmeraum (7) freigibt, dass der Aufnahmeraum (7) über zumindest eine Öffnung (9) nach außen verfügt und dass der Bügelabschnitt (3) einen Fotorahmen ausbildet.

2. Brillenbügel nach Anspruch 1, **dadurch gekennzeichnet, dass** der Aufnahmeraum (7) zur Aufnahme eines flächigen Designelementes (8) eine längliche, schlitzartige Form aufweist.

3. Brillenbügel nach Anspruch 1, **dadurch gekennzeichnet, dass** der Aufnahmeraum (7) zur Aufnahme eines Fluids oder einer körnigen Schüttung geschlossen ausgebildet ist.

4. Brillenbügel nach einem der Ansprüche 1 bis 3, **dadurch gekennzeichnet, dass** der den Aufnahmeraum (7) umfassende Bügelabschnitt (3) aus zwei gegenüberliegenden und im wesentlichen parallel zueinander verlaufenden seitlichen Wandabschnitten (5, 5') gebildet ist, wobei die zwei seitlichen Wandabschnitte (5, 5') an einer Oberkante (O) und einer Unterkante (U) des Brillenbügels über einen oberen und unteren Verbindungswandabschnitt (6, 6') miteinander verbunden sind.

5. Brillenbügel nach einem der vorhergehenden Ansprüche, **dadurch gekennzeichnet, dass** die nach außen gerichtete Öffnung (9) im Anschlussbereich (4), an der Oberkante (O) des Brillenbügels (1), an der Unterkante (U) des Brillenbügels (1) und/oder im Übergangsbereich zwischen dem Auflage- und Verbindungsabschnitt (2, 3) angeordnet ist.

6. Brillenbügel nach Anspruch 5, **dadurch gekennzeichnet, dass** die nach außen gerichtete Öffnung (9) zur Zuführung des flächigen Designelementes (8) in den Aufnahmeraum (7) schlitzartig oder spaltartig ausgebildet ist.

7. Brillenbügel nach einem der Ansprüche 3 bis 6, **dadurch gekennzeichnet, dass** zumindest ein transparenter Abschnitt (3') in den seitlichen Wandabschnitten (5, 5') vorgesehen ist.

8. Brillenbügel nach Anspruch 7, **dadurch gekennzeichnet, dass** mehrere transparente Abschnitte (3') unterschiedlicher Form und Größe vorgesehen sind und/oder dass der zumindest eine transparente Abschnitt (3') ein Sichtfenster bildet.

9. Brillenbügel nach einem der vorhergehenden Ansprüche, **dadurch gekennzeichnet, dass** das flächige Designelement (8) aus Metall, Folie, Kunststofffolie, Papier und/oder Fotopapier hergestellt ist und/oder dass das flächige Designelement (8) benutzerindividuell personalisierbar ist, vorzugsweise durch Bedrucken zumindest eines Seitenabschnittes des flächigen Designelementes (8).

10. Brillenbügel nach einem der vorhergehenden Ansprüche, **dadurch gekennzeichnet, dass** das flächige Designelement (8) ein in den Aufnahmeraum (7) über die Öffnung (9) einführbares Foto ist.

11. Brillenbügel nach einem der vorhergehenden Ansprüche, **dadurch gekennzeichnet, dass** im Anschlussbereich (4) des Brillenbügels (1) ein mehrteiliges Befestigungsscharnier vorgesehen ist, das über einen Blendenabschnitt (11) verfügt, der im geöffneten Zustand eine im Anschlussbereich (4) vorgesehen Öffnung (9) des Brillenbügels (1) zur Zuführung des flächigen Designelements (8) überdeckt.

12. Brillengestell mit zumindest einem Brillenbügel nach einem der vorhergehenden Ansprüche.

13. Brille mit einem Brillengestell nach Anspruch 12.

14. Flächiges Designelement zur Verwendung in einem Brillenbügel nach einem der Ansprüche 1 bis 13, **dadurch gekennzeichnet, dass** die Querschnittsform und/oder Größe des flächige Designelementes (8) an die Form und/oder Größe des Aufnahmeraums (7) angepasst ist.

15. Flächiges Designelement nach Anspruch 14, **dadurch gekennzeichnet, dass** das flächige Designelement (8) ein Foto ist.
